# EUROPEAN PATENT APPLICATION

(11) **EP 2 551 289 A1**
(43) Date of publication of application: **30.01.2013**
(21) Application number: 11175317.4
(22) Date of filing: 26.07.2011
(51) Int. Cl.: C08G 65/00, C08G 65/26

(54) **Process for the continuous production of polyetherols**

(71) Applicant: BASF SE, 67056 Ludwigshafen (DE)
(72) Inventor: The designation of the inventor has not yet been filed

(57) **Abstract**

The present invention relates to a process for the continuous production of polyether alcohols.

## Description

The present invention relates to a process for the continuous production of polyether alcohols.

Polyetherols, also called polyether polyols, polyether alcohols or, more general, polyols, are manufactured in large quantities and are widely used, for example for manufacturing polyurethanes (PU). For specific PU applications, specific polyetherols are needed. For example, for the manufacture of rigid foam PU polyols with a high functionality are required, whereas polyols with a low functionality may be used for the manufacture of soft PU foams.

In the context of the present invention, "rigid foam PU" in particular refers to foams manufactured from polyols with a functionality of 3.5 to 8 and an OH number of 150 to 800, and "soft PU foams" in particular refers to foams manufactured from polyols with a functionality of 2 to 4 and an OH number of 30 to 150.

One kind of polyetherols are sugar-glycerine- and/or vicinal toluene-diamine (vicTDA)- and/or sorbitol initiated polyetherols. "vicinal TDA" refers to the 2,3- and 3,4-isomers of TDA, meaning that the amine substituents are located at neighbouring carbon atoms.

These sugar-glycerine- and/or vicinal toluene-diamine and or sorbitol initiated polyetherols are mostly used in polyurethane foam applications, mainly in rigid foam applications.

Conventionally used alkoxylation catalysts, like KOH, have some disadvantages. For example, KOH-catalyzed processes usually require a tedious work-up after the reaction (by neutralization and filtration).

The production of polyols by catalyzed alkoxylation of a starter compound is conventionally done in a batch or semi-batch process. For example, WO 2009/ 056513 A1 (Shell) describes alkoxylation reactions in a semi-batch process.

However, batch and semi-batch processes also have some disadvantages. For example, in semi-batch processes the production equipment, e. g. reactors, frequently has to be cleaned after each batch, leading to more downtime in the production plant and lower space time yield.

In order to overcome the mentioned problems, a continuous process using amine catalysts has been developed and is disclosed for example in WO 2009/ 077517 A1. In a continuous process, the reactors usually have to be cleaned less frequently, and amine catalysts usually may remain in the reaction product, thus making tedious work-up procedures after the reaction unnecessary.

However, the currently used continuous process for the alkoxylation of certain starter compounds also has some disadvantages.

For example, in WO2009/077517 A1, a continuous process for the production of polyether alcohols was described, based on amine catalysis, mainly N,N-dimethylethanolamine (DMEOA) catalyst in the temperature range from 50-180 °C. It was however found that the DMEOA catalyzed process above 115 °C gives low catalytic activity. On the other hand, high temperatures are useful for better heat removal and low viscosities for efficient mixing and improved solubilities of solid starters.

WO2009/077517 A1 also describes products with a molecular weight range from 200-2000 g/mol. However, products with a molecular weight > 600 g/mol can only be obtained with very high residence times if DMEOA / TEA (triethylamine)/ TMA (trimethylamine)/ DMCHA (dimethylcyclohexylamine) are used.

Furthermore, the DMEOA / TEA / TMA / DMCHA catalyzed process requires about 0.5 wt% catalyst in order to reach the desired OH number. A low catalyst concentration of amine catalyst is highly desirable because the amine catalyst can influence the reactivity of the polyol in the following PU reaction. This leads to problems in slow PU systems. In order to avoid this problem, the amine catalyst needs to be separated leading to additional process steps.

Besides, there are also some other problems in the described process, for example abrasion in the sugar dosing unit, blockage in the sugar dosing unit and the higher residual / unreacted sugar in the product.

Thus, the objective of the present invention was to develop a continuous process which allows alkoxylation at higher reaction temperatures and gives access to products with higher molecular weights with short residence times using low catalyst loadings in order to minimize the effect of the catalyst on the polyol reactivity. Besides, it should be possible to use all sorts of starter compounds in the continuous process, including starter compounds solid at room temperature.

The problems mentioned above could surprisingly be solved by a continuous process for the production of polyether alcohols using imidazole and/or derivatives of imidazole as catalysts at higher temperatures.

Thus, the object of the present invention is a process for the continuous production of polyether alcohols by catalyzed addition of at least one alkylene oxide to at least one hydrogen-functional starter compound, wherein the temperature during the reaction is above 115°C, preferably at least 120°C and even more preferably at least 125°C, and wherein at least one catalyst is selected from the list consisting of imidazole, derivatives of imidazole and mixtures thereof, preferably imidazole.

It is preferred that all of the catalysts used in the inventive process for the continuous production of polyether alcohols are selected from the list consisting of imidazole, derivatives of imidazole and mixtures thereof.

In a prefererred embodiment of the inventive process, only one catalyst is used.
In another embodiment of the inventive process, two or more catalysts are used, for example as a mixture of catalysts.

"Derivatives of imidazole" in the context of this invention in particular refers to N-alkylated imidazoles (substitution at 1-position), wherein the alkyl substituent is preferably selected from C1- to C10-compounds, more preferably from C1- to C5-compounds.

Particularly preferred alkyl substituents on the nitrogen atom of imidazole are ethyl and methyl, especially methyl.

Derivatives of imidazole also include imidazole moieties substituted with alkyl substituents on the 2- and/or 4- and/or 5-position, preferably on the 4- and/or 5-position, wherein the alkyl substituent(s) is/ are selected from C1- to C10-compounds, preferably from C1- to C5-compounds. Derivatives of imidazole futhermore include imidazole moieties substituted with alkyl substituents on one of the nitrogen atoms (1- or 3-position) and on the 2- and/or 4- and/or 5-position, preferably on the 4- and/or 5-position, wherein the alkyl substituent(s) is/ are selected from C1-to C10-compounds, preferably from C1- to C5-compounds.

Particularly preferred alkyl substituents are, also in these cases, ethyl and methyl, especially methyl.

"Derivatives of imidazole" may also include other kinds of substituents on the imidazole moiety, preferably on the nitrogen atom (1-position), for example aryl substituents.

In an especially prefererred embodiment, the imidazole moiety bears just one alkyl substituent on the nitrogen atom (1-position), wherein the alkyl substituent is ethyl or methyl, preferably methyl.

However, it is most preferred to use unsubstituted imidazole as catalyst.

In a particularly preferred embodiment of the inventive process for the continuous production of polyether alcohols, at least one catalyst is (unsubstituted) imidazole. In the most preferred embodiment of the inventive process for the continuous production of polyether alcohols, imidazole is used as the only catalyst.

The complete process is continuous from feeding the starters until stripping out PO and water. There is no starter dehydration as in KOH catalyzed process and there is no catalyst work-up or product stabilization at the end of the process.

The process usually contains 2 continuous stirred tank reactors (CSTRs) in series and followed by 1 plug flow reactor (PFR). Continuous stirred tank reactors are characterized by a broad residence time distribution (Ref: 1. Chemical reaction engineering, Octave Levenspiel, Wiley and Sons., 3rd Edition, 1999, pg: 266, 2. Perry's Chemical Engineers Handbook, Stanley Walas, McGraw Hill, 7th edition, 1998, section 23, pg: 23-18), meaning a broad range of polymerization degrees (Ref: Model Reactors and Their Design Equations, Vladimir Hlavacek1, Jan A. Puszynski2, Hendrik J. Viljoen3, Jorge E. Gatica4 Published Online: 15 JUN 2000 DOI: 10.1002/14356007.b04_121) in the reactor at steady state as compared to the plug flow reactor which is characterized by a narrow residence time distribution meaning different degree of polymerization at different points along the length of the reactor. The CSTRs offers better conversion of solid starters due to intensive mixing which is not possible in the plug flow reactors due to segregation of solid starters from rest of the polyol during the flow through reactors. One or more CSTRs are used to achieve more than 50% conversion of alkylene oxide fed to the process, preferably more than 70% conversion and most preferably more than 80% conversion of alkylene oxide.

Thus, the use of at least one CSTR offers the advantage of being able to use all sorts of hydrogen-functional starter compounds in a continuous process, including starter compounds which are solid at room temperature.

Said temperature during the reaction is of the reaction mixture. So the temperature would, in one embodiment, be measured in those two CSTRS and at the entrance of the PFR.
The temperature is measured with a temperature sensor in each of the reaction compartments.

Surprisingly it was found that catalysts selected from the group mentioned above and mixtures thereof allow continuous alkoxylation at higher reaction temperatures and thereby giving short residence times. The various advantages are listed below:
- Surprisingly it was found that the process catalyzed by the specific catalysts mentioned above works smoothly at temperatures above 115 °C.
- Using one of the specific catalysts mentioned above at high temperatures gives access to products with a molecular weight of > 600 g/mol, with much shorter residence times in the continuous process.
- In addition it was found that the process runs at very low catalyst concentration of 0.02-0.4 wt% using one of the specific catalysts mentioned above. The low catalyst concentration has little influence on the polyol reactivity in PU reaction, thus a further catalyst work-up step is obsolete.

The process as mentioned in WO 2007/ 147780 A1 could be carried out in a series of continuous reactor cascades consisting of stirred tank reactors and tubular reactors. The other reactor types which could be used for the reaction are the jet loop reactors, Buss reactors, compartment reactors, compartment reactors with one or more backmixed compartments, bubble column reactors, cascaded bubble column reactors, a loop reactor with static mixed elements, Baffled tubular reactor with oscillating flow, or a combination of above mentioned reactors in one or more hybrid reactor.

In a preferred embodiment of the inventive process, at least one continuously stirred tank reactor (CSTR) is used.
In another preferred embodiment of the present invention, a series of continuously stirred tank reactors (CSTRs) or a combination of CSTRs with plug flow reactors (PFRs) are used, having multiple feed of raw materials or product outlets from reactor series.

In a preferred embodiment of the present invention, at least one of the hydrogen-functional starter compounds is solid at room temperature.

In a particularly preferred embodiment of the present invention, the solid hydrogen-functional starter compound is converted to a paste, wherein this paste is continuously added to the reactor vessel.

In a particularly preferred embodiment of the present invention, the paste is manufactured by mixing of the solid hydrogen-functional starter compound at room temperature with a compound liquid at room temperature or at elevated temperature.

In the context of the present invention, "paste" refers to mixtures of compounds solid at room temperature with compounds liquid at room temperature, each containing hydrogen atoms reactive with alkylene oxides. The compounds solid at room temperature are present in the form of particles with an average particle size of less than 2 mm. The mixtures are pumpable.

"Pumpable" means, in the context of the present invention, that the viscosity of the paste is at most 100 000 mPa.s, preferably 40 000 mPa.s, most preferably 15000 mPa s. A viscosity like this may be reached already at room temperature. If this is not the case, the viscosity may be adjusted by elevating the temperature; the determination of the viscosity is according to DIN 53019 (DIN = "Deutsche Industrienorm", German industry norm):

The solid starter could also be added to the process using a rotor stator dispersion machine or a dispersion pump which disperses the crystals or powdered starter in the liquid phase in the process (Liquid starter, reaction mixture in one of the reactors, intermediate product or end product or a combination of at least two of above mentioned liquids). The solid raw material could also be added to the reactor by passing it through a fast melting nozzles to melt the solid starter and feed it to the process in a very short time.

In a preferred embodiment of the present invention, the catalyst concentration is in the range of 0.02-0.4 mass% of the throughput of the continuous process.

The catalyst is preferably added as a solid in the reactor or in the paste, or fed directly to the process as a melt or dissolved in water or any other solvent, or as a mixture with other liquid. In a preferred embodiment, the catalyst is added as a solution in water, preferably as a 20 % to 90 % by weight solution in water, more preferably as a 50 % to 70 % by weight solution in water.

In a preferred embodiment of the present invention, polyether alcohols with an OH number <1000 mg KOH/ g, more preferably <500 mg KOH/g are produced.
The OH number is determined according to DIN EN 1240:2010 (DIN = "Deutsche Industrienorm", Germany industry standard).

In a preferred embodiment of the present invention, at least one alkylene oxide is selected from the group consisting of ethylene oxide, propylene oxide, butylene oxide. More preferably, all of the alkylene oxides used in the inventive process are selected from the group consisting of ethylene oxide (EO), propylene oxide (PO), butylene oxide (BO); very preferably, propylene oxide is one of the used alkylene oxides.

In a particularly preferred embodiment of the present invention, one alkylene oxide is used, wherein this alkylene oxide is propylene oxide.

The PO may have been produced using the HPPO process (hydrogen peroxide based propylene oxide) or the styrene monomer-PO (SMPO) process or the chlorohydrin process.

In a preferred embodiment of the present invention, at least one hydrogen-functional starter compound is selected from the group consisting of NH- and OH-functional compounds, and mixtures thereof. More preferably, all of the hydrogen-functional starter compounds are selected from the group consisting of NH- and OH-functional compounds, and mixtures thereof.

In another preferred embodiment of the present invention, at least one hydrogen-functional starter compound is selected from the group consisting of NH-functional compounds, and mixtures thereof. More preferably, all of the hydrogen-functional starter compounds are selected from the group consisting of NH-functional compounds, and mixtures thereof.

In another preferred embodiment of the present invention, at least one hydrogen-functional starter compound is selected from the group consisting of OH-functional compounds, and mixtures thereof. More preferably, all of the hydrogen-functional starter compounds are selected from the group consisting of OH-functional compounds, and mixtures thereof.

In a preferred embodiment, the OH-functional compounds may be selected from the group consisting of carbohydrates.

In another preferred embodiment of the inventive process, the OH-functional compounds may be selected from the group consisting of pentaerythrite, sorbit, saccharose, cellulose, starch, hydrolysates of starch, water, glycerine, ethylene glycol (EG), diethylene glycol (DEG), propylene glycol (PG), dipropylene glycol (DPG), butanediol, polyetherols, and mixtures thereof. Preferably, the NH-functional compounds compounds may be selected from the group consisting of aliphatic amines, aromatic amines, aminoalcohols, and mixtures thereof.

Particularly preferred are NH-functional compounds selected from the group consisting of ethane-1,2-diamine (EDA), ethanol amine, diethanol amine, amino phenols, amino toluene, toluene diamine (TDA), aniline, 4,4'-methylene dianiline (MDA), polymeric 4,4'-methylene dianiline (PMDA), urea and its derivatives, melamine, phenylcyclohexylamine, and mixtures thereof.
In case of TDA, the vicinal isomers are preferred.

In a preferred embodiment of the inventive process, at least one hydrogen-functional starter compound is selected from the group containing compounds with a functionality of more than 3.5, more preferably in the range of 4 to 6.5.

In a preferred embodiment of the present invention, at least one hydrogen-functional starter compound, and more preferred all of the hydrogen-functional starters, is/ are selected from the group consisting of crystal sugar, powdered sugar, a slurry of sugar in other liquid starters and a sugar syrup.

In an especially preferred embodiment of the inventive process for the continuous production of polyether alcohols, the catalyst is imidazole, and the alkylene oxide is propylene oxide, and the hydrogen-functional starter compound is selected from the group consisting of NH- and OH-functional compounds, and mixtures thereof, most preferably from sugar and/or water, glycerine, ethylene glycol (EG), diethylene glycol (DEG), propylene glycol (PG), dipropylene glycol (DPG), butanediol, TDA..

Besides, there were more improvements in the process described in WO2009/077517A1, other than the use of specific catalysts.

For example, any air pockets in the sugar dosing line leads to sugar deposition / crystallization on the inner surface of the pipe thus eventually blocking the sugar dosing line. This could preferentially be avoided by using a buffer vessel to separate entrained gas from the sugar-glycerine paste before it is pumped to the reactor. The degassed paste has a smooth flow through the dosing line, thus reducing pressure peaks in the pump which reduced the wear and tear of the pump.

Furthermore, when the sugar-glycerine paste was added to the reactor by a dip tube or in the external loop, it was difficult to disperse the sugar paste in the reactor due to the viscosity difference. In order to overcome this problem, a dispersion equipment such as a rotor-stator, high shear mixer / CSTR, static mixer could preferentially be installed in the external loop of the reactor. The higher energy dissipation of this dispersion equipment ensured homogeneous dispersion of sugar-glycerine paste in the polyetherol in the reactor reducing the residual sugar in the final product.

One object of the present invention is also a polyether alcohol, obtainable by the inventive process for the continuous production of polyether alcohols by catalyzed addition of at least one alkylene oxide to at least one hydrogen-functional starter compound.

A further object of the present invention is the use of a polyether alcohol, obtainable by the inventive process, for the manufacture of polyurethanes.

Another object of the present invention is a process for the manufacture of polyurethanes, by reacting at least one polyisocyanate or diisocyanate with at least one polyether alcohol, obtainable by the inventive process.

In a preferred embodiment of the present invention, the polyurethane is a rigid foam polyurethane.

In a preferred embodiment of the present invention, the rigid foam polyurethane obtainable by the inventive process for the continuous production of polyether alcohols is used in the field of automotive, construction or appliance systems.

### Examples

In the following, some examples are given in order to illustrate some aspects of the present invention. However, these examples are in no way meant to limit the scope of the present invention.

### Example 1:

A mixture of sucrose and glycerin (ratio 77/23) was produced in an extruder and pumped in the external circulation loop of a continuously stirred tank reactor (CSTR) (2.8 liter) using a piston pump.

Dimethylethanol amine (DMEOA) (0.75 wt% of total feed to the CSTR) and propylene oxide was continuously added to the CSTR using HPLC pumps. The total mass flow was about 918 g/h. The reaction mixture was continuously drawn from the CSTR with the same mass flow (918 g/h) as the feed to the CSTR and fed to a tubular reactor (volume 1.1 liter) in order to achieve high conversion of PO. The unconverted propylene oxide was continuously removed in a stripping vessel under vacuum (50 mbar). The reaction temperature was 120 °C in the CSTR as well as in the tubular reactor. The product was not worked-up. The reaction product that was obtained during the steady state operation (after 5 residence times) was analyzed. In CSTR the propylene oxide concentration was about 7 wt% measured using an ATR-IR spectrophotometer. The OH number of the product was 475 mg KOH/g and the viscosity was about 25202 mPa s. No residual sugar could be detected in the product.

Compared to this, when the experiment was carried out at 110°C in the CSTR and /or in the tubular reactor, the free Propylene oxide concentration in the reactor was about 5 wt%. The OH number was 450 mg KOH/g and the viscosity of the product was about 22500 mPa s, which were the required properties of the polyetherol.

Comparison experiments were done with imidazole catalyst (50% wt solution in water, 0.3 wt% of total feed to CSTR) at 110°C, 120 °C and 130°C in the reactor described above with a total mass flow of 918 g/h. The product analytics is summarized in the table below.

| Experiments | Catalyst | Reaction temperature °C | Free propylene oxide concentration wt% | OH number mg KOH/g | Viscosity @ 25°C mPa s |
|---|---|---|---|---|---|
| 1 | DMEOA | 120 | 7 | 475 | 25202 |
| 2 | Imidazole | 110 | 8 | 451 | 18256 |
| 3 | Imidazole | 120 | 5.5 | 452 | 17860 |
| 4 | Imidazole | 130 | 4 | 448 | 18170 |

It can be seen from the experimental results that the use of an imidazole catalyst at higher temperatures leads to higher activities; besides, an OH number and a viscosity within the desired specifications could be obtained in the product manufactured according to the inventive process.

### Example 2:

A mixture of Sucrose and Glycerin (Ratio 67/33) was produced in an shear force mixer and pumped in the external circulation loop of a continuously stirred tank reactor (CSTR) (600 liter) using a positive displacement pump.

Dimethlyethanolamine (0.75 wt% of total feed to the CSTR) and propylene oxide was continuously added to the CSTR using membrane pumps (Lewa pumps). The total mass flow was about 55 kg/h. Part of this mixture was continuously fed to a tubular reactor (volume 200 liter) in order to achieve high conversion of PO. The unconverted propylene oxide was continuously removed in a stripping vessel under vacuum (50 mbar). The reaction temperature was 110 °C in the CSTR as well as in the tubular reactor. The product was not worked-up. The reaction product that was obtained during the steady state operation (after 5 residence times) was analyzed. Another experiment was carried out with 50% solution of imidazole in water (0.3 % of the total feed) with the same recipe as described above but with slightly higher temperatures as given below. The product from this experiment was analyzed and the results are shown in the table below.

| Experiment | Catalyst | Reaction temperature °C | Catalyst concentration, wt% | OH number mg KOH/g | Free PO concentration wt% | Viscosity @ 25°C mPa s |
|---|---|---|---|---|---|---|
| 5 | DMEOA | 110 | 0.75 | 398 | 11.5 | 6814 |
| 6 | Imidazole | 130 | 0.15 | 358 | 6 | 3722 |

The examples show that the necessary catalyst concentration is lower when using imidazole as catalyst, compared to the use of DMEOA catalyst.

## Claims

1. A process for the continuous production of polyether alcohols by catalyzed addition of at least one alkylene oxide to at least one hydrogen-functional starter compound, wherein the temperature during the reaction is above 115 °C, and wherein at least one catalyst is selected from the list consisting of imidazole, derivatives of imidazole and mixtures thereof.

2. A process for the continuous production of polyether alcohols according to claim 1, wherein all of the used catalysts are selected from the list given in claim 1.

3. A process for the continuous production of polyether alcohols according to claim 1 or 2, wherein at least one catalyst is selected from the group containing derivatives of imidazole.

4. A process for the continuous production of polyether alcohols according to claim 3, wherein the group containing derivatives of imidazole consists of N-alkylated imidazoles.

5. A process for the continuous production of polyether alcohols according to any of the preceding claims, wherein at least one catalyst is imidazole.

6. A process for the continuous production of polyether alcohols according to claim 5, wherein one catalyst is used, wherein this catalyst is imidazole.

7. A process for the continuous production of polyether alcohols according to any of the preceding claims, wherein at least one of the hydrogen-functional starter compounds is solid at room temperature.

8. Process for the continuous production of polyether alcohols according to any of the preceding claims, wherein the catalyst concentration is in the range of 0,02-0,4% mass of the throughput of the continuous process.

9. Process according to any of the preceding claims, wherein the catalyst is fed as a solid or paste or as a liquid feed as a melt, or dissolved in a solvent or water or mixed with other liquid feed in the reactor.

10. Process for the continuous production of polyether alcohols according to any of the preceding claims, wherein polyether alcohols with a OH number < 1000 mg KOH/g are produced.

11. Process for the continuous production of polyether alcohols according to any of the preceding claims, wherein the solid hydrogen-functional starter compound is converted to a paste, and wherein this paste is continuously added to the reactor vessel.

12. Process for the continuous production of polyether alcohols according to any of the preceding claims, wherein the paste is manufactured by mixing of the solid hydrogen-functional starter compound at room temperature with a compound liquid at room temperature or at elevated temperature.

13. Process for the continuous production of polyether alcohols according to any of the preceding claims, wherein at least one continuously stirred tank reactor (CSTR) is used.

14. Process for the continuous production of polyether alcohols according to any of the preceding claims, wherein a series of continuously stirred tank reactors (CSTRs) or a combination of CSTRs with plug flow reactors (PFRs) are used, having multiple feed of raw materials or product outlets from reactor series.

15. Process for the continuous production of polyether alcohols according to any of the preceding claims, wherein the temperature during the reaction is at least 120 °C.

16. Process for the continuous production of polyether alcohols according to any of the preceding claims, wherein at least one alkylene oxide is selected from the group consisting of ethylene oxide, propylene oxide, butylene oxide.

17. Process for the continuous production of polyether alcohols according to any of the preceding claims, wherein one alkylene oxide is used, and wherein this alkylene oxide is propylene oxide.

18. Process for the continuous production of polyether alcohols according to any of the preceding claims, wherein at least one hydrogen-functional starter compound is selected from the group consisting of NH- and OH-functional compounds, and mixtures thereof.

19. Process for the continuous production of polyether alcohols according to any of the preceding claims, wherein at least one hydrogen-functional starter compound is selected from the group consisting of NH-functional compounds, and mixtures thereof.

20. Process for the continuous production of polyether alcohols according to any of claims 1 to 18, wherein at least one hydrogen-functional starter compound is selected from the group consisting of OH-functional compounds, and mixtures thereof.

21. Process for the continuous production of polyether alcohols according to claim 18 or 20, wherein the OH-functional compounds are selected from the group consisting of pentaerythrite, sorbit, saccharose, cellulose, starch, hydrolysates of starch, water, glycerine, ethylene glycol (EG), diethylene glycol (DEG), propylene glycol (PG), dipropylene glycol (DPG), butanediol, polyetherols, and mixtures thereof.

22. Process for the continuous production of polyether alcohols according to claim 18 or 19, wherein the NH-functional compounds are selected from the group consisting of aliphatic amines, aromatic amines, aminoalcohols, and mixtures thereof.

23. Process for the continuous production of polyether alcohols according to claim 18 or 19, wherein the NH- functional compounds are selected from the group consisting of ethane-1,2-diamine (EDA), ethanol amine, diethanol amine, amino phenols, amino toluene, toluene diamine (TDA), aniline, 4,4'-methylene dianiline (MDA), polymeric 4,4'-methylene dianiline (PMDA), melamine, phenylcyclohexylamine.

24. Process for the continuous production of polyether alcohols according to any of claims 1 to 20 or claim 22, wherein at least one hydrogen-functional starter compound is selected from the group containing compounds with an average functionality of more than 3,5.

25. Polyether alcohol, obtainable by the process according to any of claims 1 to 24.

26. Use of a polyether alcohol, obtainable by the process according to any of claims 1 to 24, for the manufacture of polyurethanes.

27. Process for the manufacture of polyurethanes, by reacting at least one polyisocyanate or diisocyanate with at least one polyether alcohol, obtainable by the process according to any of claims 1 to 24.

28. Process for the manufacture of polyurethanes according to claim 27, wherein the polyurethane is a rigid foam polyurethane.

29. Use of a rigid foam polyurethane, obtainable by the process according to claim 28, in the field of automotive, appliance or construction.
